# EUROPÄISCHE PATENTSCHRIFT

(11) **EP 2 655 175 B1**
(45) Veröffentlichungstag und Bekanntmachung des Hinweises auf die Patenterteilung: **26.12.2018**
(21) Anmeldenummer: 11776369.8
(22) Anmeldetag: 27.10.2011
(51) Int. Cl.: B62D 65/04, B62D 63/02, B62D 25/20

(54) **BODENMODUL FÜR EINEN KRAFTWAGEN MIT VARIABLEM ANTRIEBSKONZEPT**
FLOOR MODUL FOR A VEHICLE WITH DIVERSE DRIVE TECHNOGOLOGIES
MODULE DE PLANCHER POUR UN VÉHICULE AVEC DIFFÉRENTES OPTIONS DE MOTORISATION

(30) Priorität: 23.12.2010 DE 102010055942
(43) Veröffentlichungstag der Anmeldung: 30.10.2013
(73) Patentinhaber: Daimler AG, 70327 Stuttgart (DE)
(72) Erfinder: GREVENER, Christoph, 75391 Gechingen (DE); HABISREITINGER, Uwe, 72250 Freudenstadt/Dietersweiler (DE); KREVET, Andreas, 71139 Ehningen (DE); MÜLLER, Matthias, 72213 Altensteig (DE); STARK, Thomas, 72074 Tübingen (DE); WIRTH, Konrad, 75233 Tiefenbronn (DE); ZÜRN, Michael, 71065 Sindelfingen (DE)
(74) Vertreter: JENSEN & SON
(86) Internationale Anmeldenummer: PCT/EP2011/005427
(87) Internationale Veröffentlichungsnummer: WO 2012/084083

(56) Entgegenhaltungen:
- EP-A1- 0 142 581
- EP-A1- 0 171 576
- EP-A1- 1 839 926
- EP-A1- 2 582 565
- WO-A1-2011/088874
- WO-A2-2011/121606
- DE-A1- 3 702 619
- DE-A1- 3 707 684
- DE-A1-102005 016 492
- DE-A1-102007 047 037
- FR-A1- 2 621 550

## Beschreibung

Die Erfindung betrifft ein Bodenmodul für einen Kraftwagen gemäß dem Oberbegriff des Patentanspruchs 1. Des Weiteren betrifft die Erfindung ein Verfahren zum Montieren eines solchen Bodenmoduls sowie ein Verfahren zum Montieren von Kraftwagen nach den Oberbegriffen der Patentansprüche 4 bzw. 6.

Ein mögliches Bodenmodul ist beispielsweise bereits aus der EP 0 171 576 A1 als bekannt zu entnehmen, bei welcher ein Bodenrohbau vorgesehen ist, welcher als rahmenartiges Chassis ausgebildet ist und neben einem Antriebsaggregat mit jeweiligen Fahrwerksgliedern auch entsprechende Sitzanlagen trägt. Auf dieses rahmenartige bzw. tragende Bodenmodul wird ein nichttragender Aufbau aufgesetzt.

Die DE 10 2007 047 037 A1 zeigt weiterhin eine Kraftfahrzeugkarosserie, bei der der Hinterwagen der Karosserie so ausgelegt ist, dass ein oder mehrere Querträger mit modulartig daran angeordneten Aggregaten je nach aktuell gewünschter Ausstattung in die Karosserie eingebaut werden können.

Darüber hinaus zeigt die EP 1 839 926 A1 ein Verfahren zum Montieren eines Kraftwagens, bei dem zwei Varianten eines Teils eines Bodens der Karosserie alternativ eingebaut werden können, von denen auf der einen Variante eine Reserveradmulde und auf der anderen ein Gaszylinder vormontiert ist.

Weiterhin zeigt die DE 37 07 684 A1 eine Modulkonstruktion für ein Fahrzeug mit mehreren Einzelmodulen, wobei als ein Modul eine Bodenplattform verwendet ist. Dabei weist das Fahrzeug erst nach dem Zusammenbau die für eine Fahrzeugkarosserie gewünschten Eigenschaften wie Crashfestigkeit und Tragfähigkeit auf, da jedes einzelne Modul einen Beitrag zur Tragfähigkeit des Gesamtfahrzeugs liefert.

Im Serienfahrzeugbau von Personenkraftwagen ist es darüber hinaus derzeit allgemein üblich, nach der Rohbaufertigung den kompletten Rohbau des Kraftwagens mit einem Inneneinbau zu versehen. Parallel zu dieser Endmontage des Inneneinbaus, welcher in einer Hauptmontagelinie durchgeführt wird, findet üblicherweise eine Vormontage des Fahrwerks und des Antriebs statt, wobei diese Komponenten üblicherweise auf einem fahrerlosen Transportsystem montiert und transportiert werden. Nachdem der jeweilige Rohbau des Personenkraftwagens in der Hauptmontagelinie bzw. Endmontage komplett mit dem Inneneinbau ausgestattet ist, kommt es üblicherweise zu der so genannten Hochzeit, bei welcher der Rohbau des Kraftwagens mit dem zugehörigen Fahrwerk und Antriebsstrang verbunden wird.

Allerdings wirft sich heute eine weitere Problematik dahingehend auf, dass jedes Fahrzeug in einer Vielzahl von Varianten, insbesondere abhängig von einem jeweiligen Antriebskonzept des Kraftwagens, hergestellt wird. Aufgrund der bislang üblichen Montageabfolge haben diese Varianten erhebliche Auswirkungen auf die Hauptmontagelinie, sodass diese derzeit äußerst komplex und kostenintensiv ist.

Aufgabe der vorliegenden Erfindung ist es daher, ein Bodenmodul und ein Verfahren zum Montieren eines solchen Bodenmoduls sowie ein Verfahren zum Montieren von Kraftwagen zu schaffen, mittels welchem sich die Herstellung der Kraftwagen insbesondere in der Hauptmontagelinie vereinfachen lässt.

Diese Aufgabe wird erfindungsgemäß durch ein Bodenmodul, ein Verfahren zum Montieren eines solchen Bodenmoduls sowie ein Verfahren zum Montieren von Kraftwagen mit den Merkmalen der Patentansprüche 1, 3 bzw. 5 gelöst. Vorteilhafte Ausgestaltungen mit zweckmäßigen und nicht-trivialen Weiterbildungen der Erfindung sind in den jeweils abhängigen Patentansprüchen angegeben.

Um ein Bodenmodul der eingangs genannten Art zu schaffen, mittels welchem sich die Herstellung von Kraftwagen insbesondere in der Hauptmontagelinie erheblich reduzieren lässt, ist es erfindungsgemäß vorgesehen, dass das Bodenmodul so ausgelegt ist, dass der Rohbau auch ohne den Bodenrohbau eine selbsttragende Karosserie bildet, und dass an dem Bodenrohbau eine Mehrzahl von Baueinheiten in Abhängigkeit eines Antriebskonzepts des entsprechenden Kraftwagens angeordnet sind.

Unter derartigen Baueinheiten können einzelne Bauteile oder aber Baugruppen verstanden werden. Insbesondere denkbar sind dabei Hitzeschilder, hydraulische Leitungen oder Kraftstoffleitungen, welche beispielsweise unterseitig des jeweiligen Bodenrohbaus in Abhängigkeit der jeweiligen Variante des Kraftwagens, insbesondere des entsprechenden Antriebskonzepts, notwendig sind.

Unter Antriebskonzept sind dabei insbesondere verschiedene Antriebssysteme für das Kraftfahrzeug, die unterschiedliche Energiequellen verwenden, also beispielsweise Verbrennungsmotoren, Gasmotoren, Elektromotoren, Brennstoffzellenantriebe oder Hybridantriebe zu verstehen. Oberseitig des Bodenrohbaus können beispielsweise Luftleitungen, elektrische Leitungen wie der Hauptkabelbaum oder jeweilige Energiespeicher wie beispielsweise Batterien, Tanks oder dergleichen angeordnet sein. Ebenfalls können beispielsweise Steuergeräte an dem Bodenrohbau befestigt sein.

Da somit erfindungsgemäß ein separates Bodenmodul vorgesehen ist, welches beispielsweise erst bei der Hochzeit mit dem eigentlichen Rohbau bzw. dem übrigen Rohbau des Kraftwagens verbunden wird, kann dieser Bodenrohbau auf besonders günstige Weise mit variantenspezifischen Baueinheiten ausgestattet werden. Diese Baueinheiten können somit beispielsweise insbesondere in Abhängigkeit des Antriebskonzeptes des Kraftwagens in einfacher Weise in einer Vormontage am Bodenmodul angebracht werden. Somit können diese aufwendigen Montagearbeiten außerhalb der Hauptmontagelinie in einer Vormontage durchgeführt werden, wodurch sich die Hauptmontagelinie bzw. Hauptlinie erheblich vereinfachen und verschlanken lässt. Weiterhin ist durch die erfindungsgemäße Wahl des Bodenrohbaus im Unterschied zu den aus dem Stand der Technik bekannten Konzepten sichergestellt, dass die Karosserie ohne das Bodenmodul auch schon vor dessen Montage selbsttragend ist und alle sicherheitstechnischen Anforderungen erfüllt.

Der vorliegende Bodenrohbau ist dabei vorzugsweise als Bodenplatte im Bereich des Hauptbodens und ggf. des Hinterwagens ausgebildet, welcher in eine hierfür vorgesehene Aussparung innerhalb des selbsttragenden Aufbaus bzw. Rohbaus des Kraftwagens eingesetzt werden kann.

In weiterer Ausgestaltung der Erfindung hat es sich dabei als vorteilhaft gezeigt, wenn insbesondere eine Mehrzahl von Baueinheiten, die an dem Bodenrohbau angeordnet sind, in Abhängigkeit eines Antriebskonzepts des entsprechenden Kraftwagens gestaltet sind. Gerade das jeweilige Antriebskonzept bedingt nämlich eine Vielzahl von Anpassungen beispielsweise im Hinblick auf jeweilige Leitungsverlegungen oder Energiespeicher, sodass sich eine Verlegung dieser Varianten in die Vormontage des jeweiligen Bodenmoduls besonders vorteilhaft auf eine Vereinfachung der Hauptmontagelinie auswirkt. Dabei sind insbesondere Ergonomievorteile in der Vormontage erzielbar.

Des Weiteren kann die Fertigungszeit innerhalb der Hauptmontagelinie nahezu konstant gehalten werden, da die Variantenbildung in der Vormontage stattfindet.

Die vorstehend im Zusammenhang mit dem erfindungsgemäßen Bodenmodul genannten Vorteile gelten auch für die Verfahren gemäß den Patentansprüchen 4 bzw. 6. Dabei zeichnet sich das Verfahren gemäß Patentanspruch 7 des Weiteren insbesondere dadurch aus, dass das Bodenmodul vor der Anordnung an dem Rohbau des Kraftwagens mit dem Fahrwerk und dem Antriebsstrang verbunden wird. Hierdurch ist es insbesondere möglich, die Variantenbildung besonders günstig in die Vormontage vorzuverlegen, sodass der Rohbau des Kraftwagens zumindest weitestgehend variantenfrei hergestellt werden kann.

Ein weiterer Vorteil liegt dabei darin, dass an entsprechenden Schnittstellen bereits Baueinheiten des Bodenmoduls mit korrespondierenden Baueinheiten auf Seiten des Vorwerks und des Antriebsstrangs verbunden werden können. So ist es beispielsweise möglich, entsprechende Leitungen auf Seiten des Bodenmoduls mit korrespondierenden Leitungen auf Seiten des Fahrwerks oder des Antriebsstrangs zu verbinden. Darüber hinaus können bereits nach dem Verbinden entsprechende Funktionstests, welche eine Interaktion der beteiligten Baueinheiten des Bodenmoduls, des Fahrwerks und des Antriebsstrangs bedingen, durchgeführt werden, bevor die eigentliche Verbindung mit dem Rohbau des Kraftwagens stattfindet.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine schematische Perspektivansicht auf eine Montagelinie zur Vormontage eines jeweiligen Fahrwerks und eines jeweiligen Antriebsstrangs des entsprechenden Kraftwagens sowie eines Bodenmoduls des jeweiligen Kraftwagens, welche miteinander im Rahmen einer so genannten Verlobung verbunden und vormontiert werden, bevor diese mit einem jeweilig zugehörigen Rohbau des entsprechenden Kraftwagens im Rahmen einer so genannten Hochzeit verbunden werden, wobei im Anschluss an die Hochzeit der Kraftwagen mit Rädern bestückt wird;
- Fig. 2: eine schematische Perspektivansicht auf die Vormontage des Antriebsstrangs und des Fahrwerks innerhalb der in Fig. 1 gezeigten Montagelinie;
- Fig. 3: eine schematische Perspektivansicht auf eine Vormontage des Bodenmoduls innerhalb der Montagelinie gemäß Fig. 1;
- Fig. 4: eine schematische Perspektivansicht auf die Verlobung des Fahrwerks und des Antriebsstrangs mit dem jeweils zugehörigen Bodenmodul innerhalb der Montagelinie gemäß Fig. 1;
- Fig. 5: eine schematische Perspektivansicht auf die Hochzeit des jeweiligen Rohbaus des Kraftwagens mit dem zugehörigen Fahrwerk und Antriebsstrang beziehungsweise dem zugehörigen Bodenmodul innerhalb der Montagelinie gemäß Fig. 1;
- Fig. 6: eine schematische Perspektivansicht auf eine mögliche Ausgestaltung des Bodenmoduls und des Rohbaus des Kraftwagens mit einer entsprechenden Aufnahmeöffnung, in deren Bereich das Bodenmodul angeordnet wird;
- Fig. 7: eine schematische Perspektivansicht auf eine Montagestation der Montagelinie gemäß Fig. 1 nach der Hochzeit, innerhalb welcher die Bestückung des Kraftwagens mit den Fahrzeugrädern erfolgt;
- Fig. 8: eine schematische Perspektivansicht auf Montagestationen einer der Montagelinie gemäß Fig. 1 nachgeschalteten Hauptmontagelinie, in welcher der jeweilige Rohbau des Kraftwagens mit dem Inneneinbau ausgestattet wird;
- Fig. 9: eine weitere ausschnittsweise Perspektivansicht auf jeweilige Montagestationen der Hauptmontagelinie, innerhalb welchen jeweilige Baueinheiten und Komponenten des Inneneinbaus zur Montage bereitgestellt sind; und in
- Fig. 10: eine Perspektivansicht auf den mit dem Fahrwerk, dem Antriebsstrang und dem Inneneinbau versehenen jeweiligen Rohbau des Kraftwagens, welcher im Anschluss an den Inneneinbau mit die Außenhaut bildenden Elementen versehen wird.

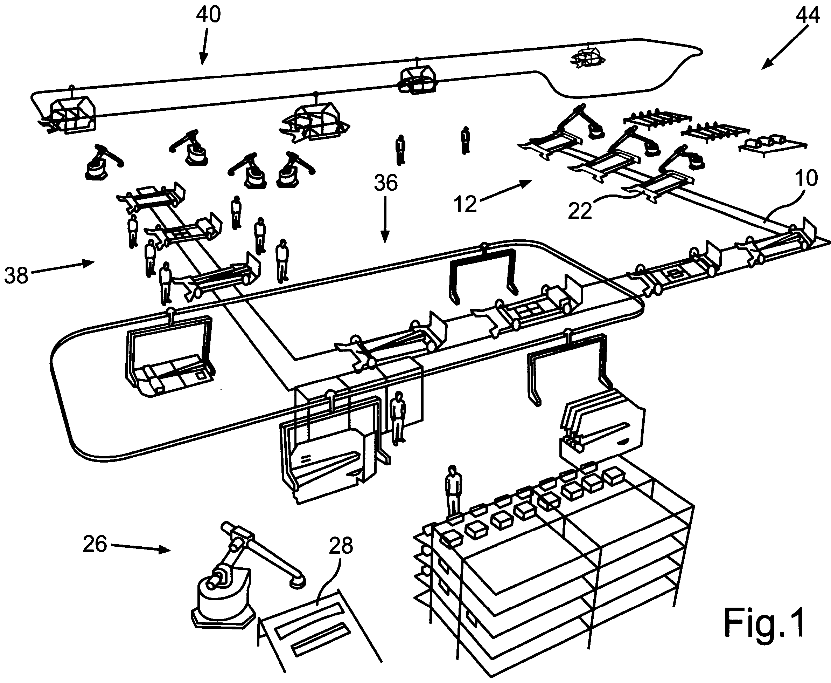

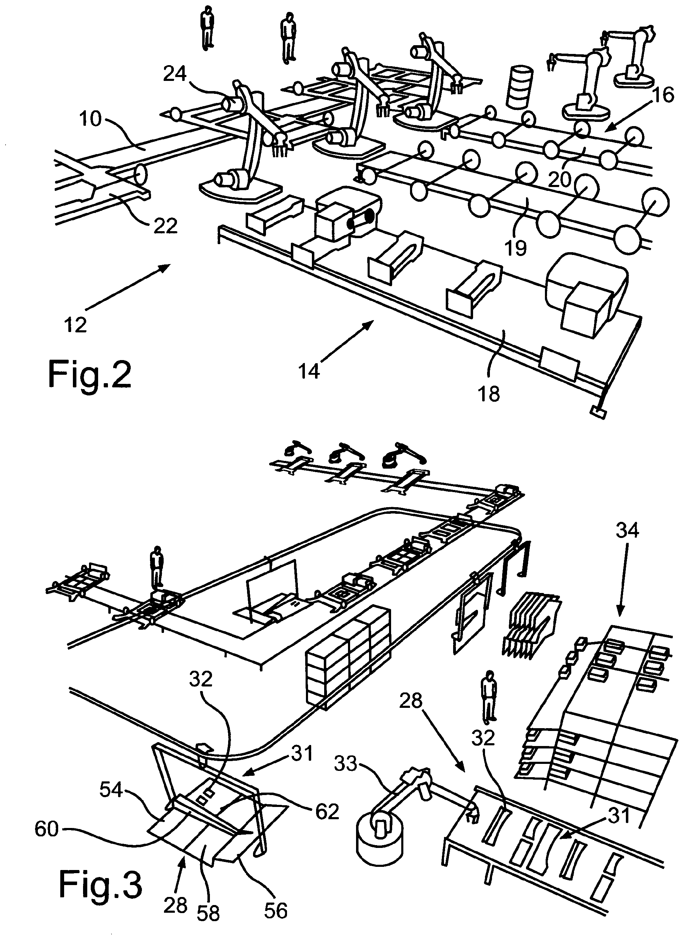

In Fig. 1 ist in einer schematischen Perspektivansicht eine einer im Weiteren noch näher erläuterten Hauptmontagelinie vorgelagerte Montagelinie zum Montieren von Kraftwagen dargestellt. Diese Montagelinie 10 soll im Weiteren in Zusammenschau mit den Fig. 2 bis 7 detailliert erläutert werden.

In Zusammenschau mit Fig. 2 ist zunächst ein erster Bereich 12 der Montagelinie 10 erkennbar, welcher die Vormontage eines jeweiligen Antriebsstrangs 14 und eines jeweiligen Fahrwerks 16 des entsprechenden Kraftwagens zeigt. Dabei zeigt Fig. 2 den Bereich 12 in einer schematischen und ausschnittsweisen Perspektivansicht.

Wie aus Fig. 2 erkennbar ist, umfasst der Bereich 12 der Montagelinie 10 eine Bereitstellungseinrichtung 18 für einen jeweils unterschiedlichen Antrieb beziehungsweise Antriebsstrang 14, welcher in Abhängigkeit des jeweiligen Antriebskonzeptes des Kraftwagens bereitgestellt wird. Hinter der Bereitstellungseinrichtung 18 für den jeweiligen Antrieb beziehungsweise Antriebsstrang 14 sind jeweilige Bereitstellungseinrichtungen 19, 20 für eine Vorderachse beziehungsweise Hinterachse des jeweiligen Fahrwerks 16 erkennbar. Neben der Vorder- und Hinterachse können darüber hinaus weitere Fahrwerksglieder oder Komponenten bereitgestellt werden.

Wie nun aus Fig. 2 erkennbar ist, werden die einzelnen Komponenten des Antriebsstrangs 14 und des Fahrwerks 16 auf einem jeweiligen Hilfsträger 22, der auf der Montagelinie 10 befördert wird, angeordnet. Dies erfolgt mittels entsprechender Roboter 24.

Die jeweiligen Komponenten des Antriebsstrangs 14 und des Fahrwerks 16 werden auf den Bereitstellungseinrichtungen 18 bis 20 sequenziert bereitgestellt und auf dem jeweiligen Hilfsträger 22, welcher einem entsprechend zu fertigenden Kraftwagens zugeordnet ist, positioniert. Die sequenzierte Anordnung und Auswahl der einzelnen Komponenten des Antriebsstrangs 14 und des Fahrwerks 16 erfolgen dabei in Abhängigkeit eines jeweiligen Antriebskonzeptes des Kraftwagens.

In Zusammenschau mit Fig. 3, die in einer weiteren ausschnittsweisen und schematischen Perspektivansicht insbesondere einen zweiten Bereich 26 der Montagelinie 10 erkennen lässt, wird die Vormontage eines Bodenmoduls 28 deutlich. Dieses Bodenmodul 28 umfasst einen Bodenrohbau 30, an welchem als Ausstattung 31 eine Mehrzahl von Baueinheiten 32 anordnenbar sind. Diese Baueinheiten 32 sind variantenspezifisch beziehungsweise variantenabhängig von dem jeweiligen Antriebskonzept des entsprechenden Kraftwagens. Als Baueinheiten 32 können dabei sowohl einzelne Bauteile beziehungsweise Bauelemente verstanden werden wie auch Zusammenbauten oder Baugruppen. Beispielsweise ist es denkbar, den Bodenrohbau 30 mit Hitzeschildern, hydraulischen Leitungen oder Kraftstoffleitungen zu versehen, welche vorzugsweise unterseitig des Bodenrohbaus 30 angeordnet sind. Ebenso ist es denkbar, Luftleitungen sowie Kabelbäume am Bodenrohbau 30 anzuordnen, und zwar vorzugsweise oberseitig. Zudem ist es denkbar, den Bodenrohbau 30 mit entsprechenden antriebskonzeptbedingten Energiespeichern, beispielsweise einem Tank, einer Batterie oder dergleichen, zu versehen. Auch entsprechende Steuergeräte, welche in Abhängigkeit des entsprechenden Antriebskonzeptes des Kraftwagens gebraucht werden, können an dem Bodenrohbau 30 angebracht sein. Elektrische Baueinheiten 32 können ebenfalls an dem Bodenrohbau 30 befestigt sein, um hierdurch das Bodenmodul 28 zu komplettieren.

Die einzelnen Baueinheiten 32 werden dabei beispielsweise mittels eines Roboters 33 an dem Bodenrohbau 30 angebracht. Vorliegend ist es symbolhaft ein Regal 34 dargestellt, an welchem die Baueinheiten 32 beispielsweise sequenziert bereitgestellt sind.

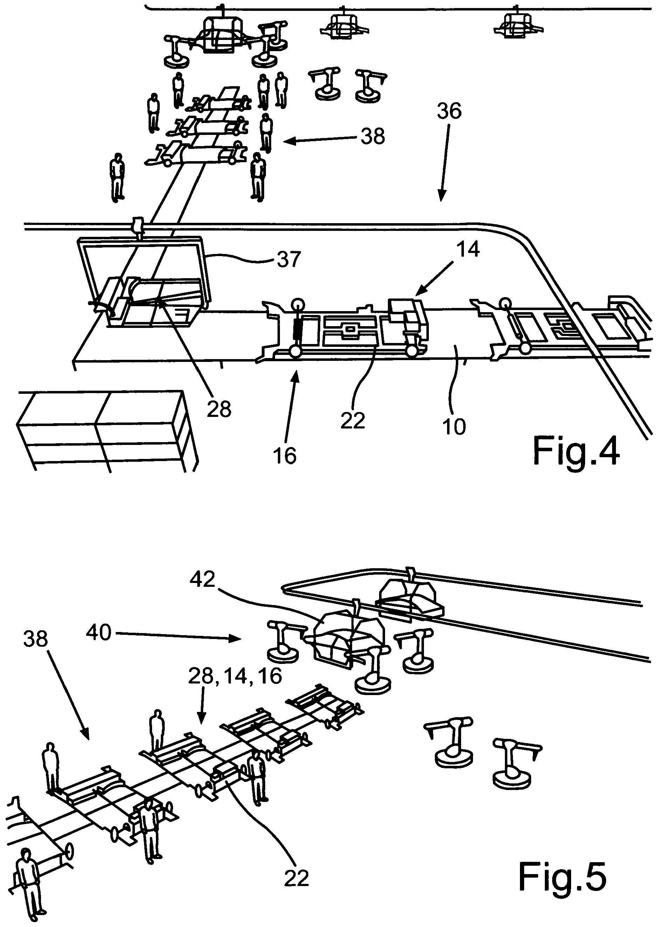

In Zusammenschau mit Fig. 4 ist in einer ausschnittsweisen und schematischen Perspektivansicht ein dritter Bereich 36 der Montagelinie 10 dargestellt. In diesem dritten Bereich erfolgt eine so genannte Verlobung des im ersten Bereich 12 vormontierten Antriebsstrangs 14 beziehungsweise Fahrwerks 16 und des im zweiten Bereich 26 vormontierten Bodenmoduls 28. Dabei ist erkennbar, dass der den Antriebsstrang 14 und das Fahrwerk 16 tragende Hilfsträger 22 von unten herangeführt und oberseitig über eine entsprechende Transporteinrichtung 37 das Bodenmodul 28 von oben her aufgesetzt wird. Durch die Verlobung entsteht somit eine vormontierte Anordnung von Antriebsstrang 14, Fahrwerk 16 und Bodenmodul 28, welche auf die jeweilige Variante des Kraftwagens beziehungsweise auf das jeweilige Antriebskonzept des Kraftwagens abgestimmt ist.

In Fig. 4 sind außerdem weitere Montagestationen 38 erkennbar, innerhalb welchen beispielsweise eine Verbindung der entsprechenden Komponenten und Baueinheiten 32 des Antriebsstrangs 14, des Fahrwerks 16 und des Bodenmoduls 28 erfolgen kann. Neben dem Verbinden der einzelnen Komponenten und Baueinheiten 32 können beispielsweise Leitungen oder Energiespeicher wie Tanks befüllt werden. Außerdem können beispielsweise elektrische Steuergeräte aktiviert werden. Nach der Verlobung sind die einzelnen Komponenten beziehungsweise Baueinheiten 32 somit vorzugsweise betriebsbereit.

In Fig. 5 ist ein vierter Bereich 40 der Montagelinie 10 erkennbar, in welchem ein jeweiliger Rohbau 42 im Rahmen einer so genannten Hochzeit mit seinem jeweils zugehörigen Antriebsstrang 14, Fahrwerk 16 und Bodenmodul 28, die zuvor im dritten Bereich 36 im Rahmen der Verlobung miteinander vereinigt worden sind, verbunden wird. Der Rohbau 42 weist hierzu eine entsprechende Ausnehmung für das Bodenmodul 28 auf, welches entsprechend angesetzt wird. Der Antriebsstrang 14 und das Fahrwerk 16 sowie das Bodenmodul 28 werden ebenfalls mit dem Rohbau 42 des Kraftwagens verbunden. Nach der Verbindung mit dem Rohbau 42 kann der Hilfsträger 22, welcher zum Tragen des Antriebsstrangs 14, des Fahrwerks 16 und des Bodenmoduls 28 gedient hat, wieder in den ersten Bereich 12 zurückgeführt werden. An dieser Stelle sei angemerkt, dass es sich beim vorliegenden Rohbau 42 um eine selbst tragende Karosserie eines Personenkraftwagens bzw. um einen selbst tragenden Aufbau eines Kraftwagens allgemein handelt.

Da - wie bereits erläutert - die jeweilige Variante des Antriebskonzepts durch entsprechende Ausbildung des Antriebsstrangs 14, des Fahrwerks 16 und des Bodenmoduls 28 erfolgt, ist der Rohbau 42 im Wesentlichen variantenfrei gestaltet. Dies bedeutet, dass die infolge des Antriebskonzeptes erforderliche Variation zumindest im Wesentlichen in die Vormontage des Antriebsstrangs 14, des Fahrwerks 16 und des Bodenmoduls 28 vorverlagert wird.

Der Bodenrohbau 30 weist dabei entsprechende Schnittstellen in Fahrzeuglängsrichtung gesehen nach vorne und nach hinten auf, sodass dieser nach vorne hin beispielsweise an einem Pedalboden oder einer vorderen Stirnwand und nach hinten an einem entsprechenden Bereich des Heckwagens befestigt werden kann.

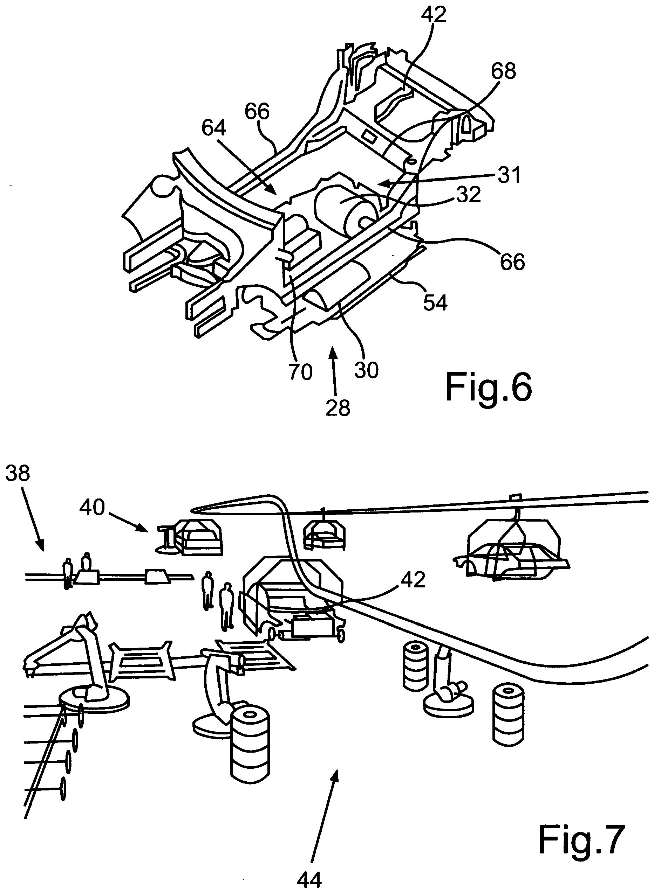

Im Zusammenschau mit Fig. 6, welche eine schematische Perspektivansicht auf eine mögliche Ausgestaltung des Bodenmoduls 28 und des Rohbaus 42 des Kraftwagens zeigt, wird erkennbar, in welcher Weise das Bodenmodul 28 nach seiner Bestückung mit der Ausstattung 31 in eine entsprechende Aufnahmeöffnung 64 des Rohbaus 42 einsetzbar ist. Die Aufnahmeöffnung 64 wird dabei im Wesentlichen gebildet durch entsprechende Seitenschwellerelemente 66 sowie nach vorne und nach hinten durch entsprechende Trägerelemente 68, 70, sodass sich eine rahmenförmige Aufnahmeöffnung 64 ergibt. Die Seitenschwellelemente 66 können dabei gegebenenfalls durch entsprechende Seitenschwellerelemente 66 auf Seiten des Bodenrohbaus 30 vervollständigt werden.

Aus Fig. 6 ist darüber hinaus erkennbar, dass vorliegend lediglich ein Teil des Rohbaus 42 der Kraftwagenkarosserie gezeigt ist. Dieser Teil kann entsprechend vor oder nach der Hochzeit, mit einem entsprechenden Aufsatz, beispielsweise einem Dachmodul, versehen werden.

Die entsprechenden Leitungen, Kabel oder dergleichen, welche am Bodenmodul 28 verlegt sind, können in einfacher Weise mit Schnittstellen auf Seiten des Rohbaus 42 oder auf Seiten des Antriebsstrangs 14 bzw. des Fahrwerks 16 verbunden werden können. Somit ergibt sich ein Entfall aufwändiger Verpackungen und Verlegungen.

Fig. 7 zeigt eine weitere Montagestation 44 der Montagelinie 10, bei welcher der Kraftwagen mit Fahrzeugrädern versehen wird. Dies hat insbesondere den Vorteil, dass somit auf Förder- und Transporteinrichtungen, welche das Gewicht des Fahrzeugs aufnehmen bzw. tragen müssen, verzichtet werden kann. Vielmehr kann ab dieser Montagestation 44 der Wagen durch die weitere Montage, insbesondere die im Weiteren noch erläuterte Hauptmontagelinie, gerollt werden. Dies kann entweder fremdkraftbetrieben oder aber durch den eigenen Antrieb des Kraftwagens erfolgen.

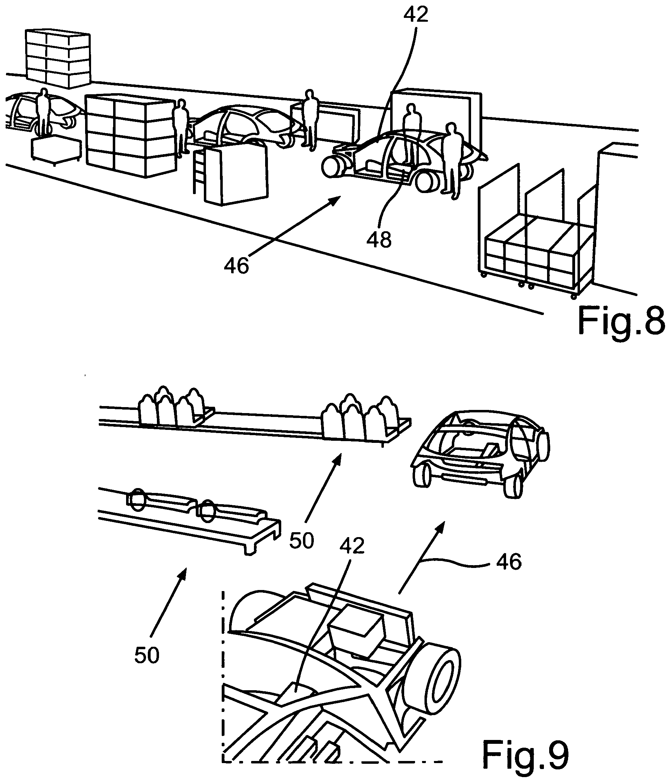

Die Fig. 8 und 9 zeigen jeweilige Perspektivansichten einer Hauptmontagelinie 46, welche sich an die Montagelinie 10 anschließt. Im Unterschied zum bisherigen Montageverfahren findet dabei erst im Anschluss an die Hochzeit die Ausstattung des Rohbaus 42 mit einem Inneneinbau 48 statt. Dieser Inneneinbau 48 umfasst insbesondere den Einbau der Instrumententafel, der Sitzanlagen, der Innenraumverkleidungen, der Mittelkonsole sowie einer Mehrzahl von weiteren Einrichtungen wie beispielsweise der Pedalerie, der Lenksäule oder anderer weiterer Ausstattungen. Hierzu zeigt Fig. 8 jeweilige Montagestationen 50, bei welchen beispielsweise entsprechend zugehörige Sitzanlagen oder Instrumententafeln montiert werden. Fig. 7 zeigt darüber hinaus, dass beispielsweise die Verscheibung des Rohbaus 42 in der Hauptmontagelinie 46 erfolgen kann.

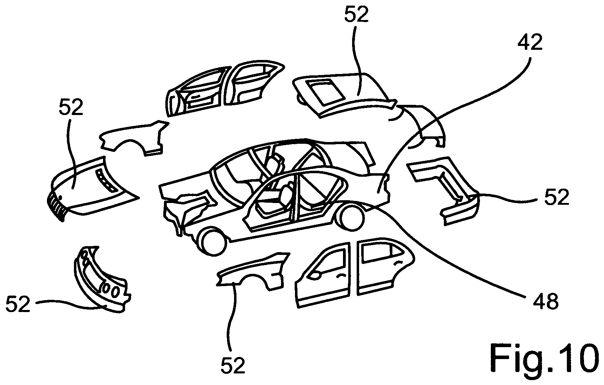

Schließlich zeigt Fig. 10 den Rohbau 42 des Kraftwagens in einer schematischen Perspektivansicht, bei welchem der Inneneinbau 48 bereits vorgenommen worden ist. Es ist erkennbar, dass neben dem Inneneinbau 48 auch die Frontscheibe und die Heckscheibe eingepasst worden sind. Diese können jedoch auch gemeinsam mit der Außenhaut in einem späteren Fertigungsschritt eingebaut werden.

In einem weiteren Verfahrensprozess innerhalb der Hauptmontagelinie wird der Rohbau 42 des Kraftwagens nach der Ausstattung mit dem Inneneinbau 48 mit einer Mehrzahl von Elementen 52 versehen, welche die Außenhaut des Kraftwagens bilden. Diese Elemente können nicht nur bewegliche Türen oder Hauben beziehungsweise Klappen, sondern auch andere Außenbeplankungsteile wie Kotflügel, Dachmodule, Frontend- und Heckmodule oder andere Außenanbauteile sein. Dabei ist der Kraftwagen vorzugsweise so ausgebildet, dass der gesamte Rohbau 42 mit entsprechenden außenbeplankenden Elementen 52 kaschiert wird. Dies hat nämlich den Vorteil, dass somit der Rohbau 42, bevor dieser zur Hochzeit angeliefert wird, lediglich mit einem Korrosionsschutz versehen werden muss, nicht jedoch mit einer Lackierung. Diese kann nämlich eingespart werden, da sämtliche Bereiche keine Sichtteile sind, sondern durch die außenbeplankenden Elemente 52 überdeckt werden.

Die Einstellung von Funktionselementen des Kraftwagens kann bevorzugter Weise bereits innerhalb der Hauptmontagelinie 46 vorgenommen werden, und zwar insbesondere deshalb, um die Umfänge im Bereich des Endes der Hauptmontagelinie 46 zu verringern. So kann beispielsweise eine Fahrwerkseinstellung, eine Scheinwerfereinstellung oder eine Kalibrierung und Inbetriebnahme von Fahrerassistenzsystemen, insbesondere auch Fahrwerksassistenzsystemen, von der Montagehauptlinie 44 bereits in die Vormontage verlagert werden. Beispielsweise können somit entsprechende Einstellungen von Funktionselementen im Anschluss an die Verlobung beziehungsweise vor oder nach der Hochzeit im Bereich der Vormontage und vor der Hauptmontagelinie 46 geprüft werden. Ebenso ist es durch die Möglichkeit zum autonomen Bewegen des Kraftwagens möglich, dass dieser auf entsprechende Rollenprüfstände oder in Bereiche zur Regenprobe bewegt wird.

## Patentansprüche

1. Bodenmodul (28) für einen Kraftwagen, insbesondere einen Personenkraftwagen, mit einen Bodenrohbau (30), welcher an einem selbsttragenden Rohbau (42) des Kraftwagens befestigbar ist, wobei an dem Bodenrohbau (30) variantenspezifische Baueinheiten (32) angeordnet sind,
**dadurch gekennzeichnet, dass**
an dem Bodenrohbau (30) eine Mehrzahl von Baueinheiten (32) in Abhängigkeit eines Antriebskonzepts des entsprechenden Kraftwagens angeordnet sind, wobei der Bodenrohbau (30) als Bodenplatte im Bereich des Hauptbodens oder des Hinterwagens ausgebildet ist, welcher in eine hierfür vorgesehene Aussparung (64) innerhalb des selbsttragenden Rohbaus (42) des Kraftwagens eingesetzt werden kann.

2. Bodenmodul (28) nach Anspruch 1,
**dadurch gekennzeichnet, dass**
an dem Bodenrohbau (30) wenigstens eine variantenspezifische Baueinheit (32) zur Energiespeicherung oder zur Leitung von Stoff- und Informationsflüssen vorgesehen ist.

3. Verfahren zum Montieren eines einen Bodenrohbau (30) umfassenden Bodenmoduls (28) in einen selbsttragenden Rohbau (42) für einen Kraftwagen, insbesondere einen Personenkraftwagen,
**dadurch gekennzeichnet, dass**
an dem Bodenrohbau (30) eine Mehrzahl von Baueinheiten (32) in Abhängigkeit eines Antriebskonzepts des entsprechenden Kraftwagens angeordnet werden.

4. Verfahren nach Anspruch 3,
**dadurch gekennzeichnet, dass**
an dem Bodenrohbau (30) wenigstens eine variantenspezifische Baueinheit (32) zur Energiespeicherung oder zur Leitung von Stoff- und Informationsflüssen vorgesehen wird.

5. Verfahren nach Anspruch 4, bei welchem ein Kraftwagen montiert wird, indem ein jeweiliger selbsttragender Rohbau (42) des Kraftwagens mit einem Bodenmodul (28) mit zugehörigem Fahrwerk (16) und Antriebsstrang (14) ausgestattet wird,
**dadurch gekennzeichnet, dass**
ein Bodenmodul (28) mit einem Bodenrohbau (30) verwendet wird, wobei an dem Bodenrohbau (30) eine Anordnung mit einer Mehrzahl von variantenspezifischen Baueinheiten (32) vormontiert worden ist.

6. Verfahren nach Anspruch 5,
**dadurch gekennzeichnet, dass**
das Bodenmodul (28) vor der Anordnung an dem Rohbau (42) des Kraftwagens mit dem Fahrwerk (16) und dem Antriebsstrang (14) verbunden wird.

## Claims

1. Floor module (28) for a motor vehicle, in particular for a passenger car, with a floor frame (30) which can be secured to a unitised body frame (42) of the motor vehicle, wherein variant-specific modular units (32) are arranged on the floor frame (30),
**characterised in that**
a plurality of modular units (32) are arranged on the floor frame (30), depending on a drive concept of the corresponding motor vehicle, wherein the floor frame (30) is designed in the region of the main floor or of the rear end as a floor panel which can be installed into a recess (64) provided for this purpose in the unitised body frame (42) of the motor vehicle.

2. Floor module (28) according to claim 1,
**characterised in that**
at least one variant-specific modular unit (32) for energy storage or for carrying material and information flows is provided on the floor frame (30).

3. Method for installing a floor module (28) into a unitised body frame (42) for a motor vehicle, in particular for a passenger car,
**characterised in that**
a plurality of modular units (32) are arranged on the floor frame (30), depending on a drive concept of the corresponding motor vehicle.

4. Method according to claim 3,
**characterised in that**
at least one variant-specific modular unit (32) for energy storage or for carrying material and information flows is provided on the floor frame (30).

5. Method according to claim 4, wherein a motor vehicle is assembled by fitting a respective unitised body frame (42) of the motor vehicle with a floor module (28) with an associated chassis (16) and drive train (14),
**characterised in that**
a floor module (28) with a floor frame (30) is used, wherein an assembly with a plurality of variant-specific modular units (32) has been preassembled on the floor frame (30).

6. Method according to claim 5,
**characterised in that**
the floor module (28) is joined to the chassis (16) and the drive train (14) before being placed on the unitised body frame (42) of the motor vehicle.

## Revendications

1. Module de plancher (28) pour un véhicule automobile, en particulier un véhicule particulier, comprenant une caisse brute de plancher (30), laquelle peut être fixée sur une caisse brute autoportante (42) du véhicule automobile, sur la caisse brute de plancher (30) étant disposées des unités de construction (32) spécifiques aux variantes, **caractérisé en ce qu'**est disposée sur la caisse brute de plancher (30) une pluralité d'unités de construction (32) en fonction d'un concept d'entraînement du véhicule automobile correspondant, la caisse brute de plancher (30) étant conçue sous la forme de plaque de plancher dans la zone du plancher principal ou de l'arrière-train, laquelle peut être placée dans un évidement (64) prévu à cet effet à l'intérieur de la caisse brute autoportante (42) du véhicule automobile.

2. Module de plancher (28) selon la revendication 1, **caractérisé en ce que** sur la caisse brute de plancher (30) est disposée au moins une unité de construction (32) spécifique à des variantes pour le stockage d'énergie ou le guidage de flux d'informations et de matière.

3. Procédé de montage d'un module de plancher (28) comprenant une caisse brute de plancher (30) dans une caisse brute autoportante (42) pour un véhicule automobile, en particulier un véhicule particulier, **caractérisé en ce que** sur la caisse brute de plancher (30) est disposée une pluralité d'unités de construction (32) en fonction d'un concept d'entraînement du véhicule automobile correspondant.

4. Procédé selon la revendication 3, **caractérisé en ce que** sur la caisse brute de plancher (30) est disposée au moins une unité de construction (32) spécifique à des variantes pour le stockage d'énergie ou le guidage de flux d'informations et de matière.

5. Procédé selon la revendication 4, selon lequel est monté un véhicule automobile, une caisse brute autoportante (42) respectif du véhicule automobile étant équipée d'un module de plancher (28) avec un châssis correspondant (16) et une chaîne cinématique (14), **caractérisé en ce qu'**un module de plancher (28) étant utilisé avec une caisse brute de plancher (30), sur la caisse brute de plancher (30) a été prémonté un système comprenant une pluralité d'unités de construction (32) spécifiques à des variantes.

6. Procédé selon la revendication 5, **caractérisé en ce que** le module de plancher (28) est reliée avant la mise en place sur la caisse brute (42) du véhicule automobile au châssis (16) et à la chaîne cinématique (14).
